# EUROPEAN PATENT APPLICATION

(11) **EP 4 329 054 A2**
(43) Date of publication of application: **28.02.2024**
(21) Application number: 23187975.0
(22) Date of filing: 27.07.2023
(51) Int. Cl.: H01M 50/103, H01M 50/209, H01M 50/238, H01M 50/242, H01M 50/291, H01M 50/293

(54) **RECHARGEABLE BATTERY MODULE**

(30) Priority: 24.08.2022 KR 20220106297
(71) Applicant: Samsung SDI Co., Ltd., Yongin-si, Gyeonggi-do 17084 (KR)
(72) Inventor: Kim, Young Deok, 17084 Yongin-si, Gyeonggi-do (KR)
(74) Representative: Gulde & Partner

(57) **Abstract**

A rechargeable battery module includes: a pair of end plates (20) located at both ends in a first direction (x) in which a plurality of battery cells (10) are stacked; and a pair of side plates (30) located at both sides in a second direction (y) crossing the first direction (x) to connect the pair of end plates (20) to each other, and the side plates (30) include: a metal plate (31) having rigidity; an insulating part (32) integrally molded to the metal plate (31); and a rib (33) protruding between adjacent battery cells (10) of the plurality of battery cells (10) in the insulating portion to support lateral surfaces of the adjacent battery cells (10).

## Description

### BACKGROUND

### 1. Field

Aspects of embodiments of the present invention relate to a rechargeable battery module.

### 2. Description of the Related Art

A rechargeable battery is a battery that is repeatedly charged and discharged, unlike a primary battery. A small-capacity rechargeable battery may be used in a portable small electronic device, such as a mobile phone, a laptop computer, and a camcorder. A large-capacity and high-density rechargeable battery may be used for a power source or energy storage for driving a motor of a hybrid vehicle and an electric vehicle, for example.

The rechargeable battery may be used as a rechargeable battery module including a plurality of battery cells connected in series and/or in parallel to be able to drive a motor of a hybrid vehicle, as an example, that requires a relatively high energy density. For example, the rechargeable battery module is formed by stacking a plurality of battery cells provided in a number corresponding to a desired amount of power in a frame in order to realize a relatively high-power rechargeable battery module (for example, for an electric vehicle).

A module frame includes a side plate and an end plate. When the battery cell in the module expands due to chemical reactions caused by charging and discharging, the side plate holds the end plate to prevent or substantially prevent movement of the end plate, and holds the battery cells and internal components from being separated from the module. In this case, the side plate must maintain a limited space.

In addition, the module frame should act as a rigid body that prevents or substantially prevents shaking of battery cells, damage to internal parts, and breakage of connections, even in x, y, and z-axis impact situations. The module frame must maintain electrical insulating performance with battery cells even under conditions of reliability and safety against module crush, vibration, impact, life span, and thermal impact.

Currently, stainless steel may be used for the side plate to secure the rigidity of the module frame, a hamming structure is applied to an upper end thereof, and a bead shape is applied to a central portion thereof. However, stainless steel increases a weight of the module and increases a cost of critical tolerance quality control. In addition, since an insulating paper using an adhesive tape may be separately attached to the side plate to satisfy the insulating performance, a material cost and an attaching process cost are increased.

The above information disclosed in this Background section is provided for enhancement of understanding of the background of the invention, and, therefore, it may contain information that does not form the prior art that is already known in this country to a person of ordinary skill in the art.

### SUMMARY

According to an aspect of embodiments of the present invention, a rechargeable battery module that may accommodate a battery cell in a frame having a side plate and an end plate is provided. According to another aspect of embodiments of the present invention, a rechargeable battery module is provided to which a low-cost, lightweight, and high-rigidity side plate is applied.

According to one or more embodiments, a rechargeable battery module includes: a pair of end plates located at both ends in a first direction in which a plurality of battery cells are stacked; and a pair of side plates located at both sides in a second direction crossing the first direction to connect the pair of end plates to each other, wherein the side plates include: a metal plate having rigidity; an insulating part integrally molded to the metal plate; and a rib protruding between adjacent battery cells of the plurality of battery cells in the insulating portion to support lateral surfaces of the adjacent battery cells.

In the side plate, the metal plate may be made of aluminum, and the insulating part may be integrally formed on an inner surface of the metal plate by injection molding of a synthetic resin material.

The metal plate may include a plurality of through-holes, and the insulating part may further include an outer insulating part connected to an outer surface of the metal plate through a through-hole of the plurality of through-holes and protrude from the outer surface.

The battery cells may be formed to have a rectangular (e.g., square) shape, and may include a first convex round structure of a lateral surface at four corners of a planar cross-section with respect to the first direction and the second direction.

The rib may include a first concave round structure corresponding to the first convex round structure of a lateral surface of a battery cell of the battery cells in a planar cross-section with respect to the first direction and the second direction.

The rib may be formed long in a third direction crossing the first direction and the second direction to correspond to an entire height of the battery cell.

The battery cells may have a rectangular (e.g., square) shape, and may include a second convex round structure of a bottom and a lateral surface of the battery cell in a longitudinal cross-section with respect to the second direction and the third direction.

The rib may be provided as a plurality of ribs spaced apart from each other along intervals of the battery cells in the second direction, and the insulating part may include a second concave round structure corresponding to the second convex round structure of the bottom and the lateral surface of the battery cell in the longitudinal cross-section with respect to the second direction and the third direction between adjacent ribs of the plurality of ribs.

A ratio (t1/t2) of a thickness (t1) of the metal plate to a thickness (t2) of the insulating part may be 16.7 % to 66.7 %, preferably 26.7 % to 56.7 %, more preferably 36.7 % to 46.7 %.

A thickness of the metal plate may be 0.5 to 2.0 mm (preferably 0.75 to 1.75 mm, more preferably 1.0 to 1.5 mm), a thickness of a portion of the insulating part, the portion being on one side of the metal plate, may be 0.3 to 0.6 mm (preferably 0.35 to 0.55 mm, more preferably 0.4 to 0.5 mm), and a thickness of the rib may be 2 to 4 mm (preferably 2.5 to 3.5 mm, more preferably 3 mm), wherein the thickness of the portion may be shared by a thickness of the insulating part and the thickness of the rib.

A radius of curvature of the first convex round structure on the lateral surface of the battery cell may be 3.5 mm, and a radius of curvature of the first concave round structure of the rib may be 3 mm that is smaller than the radius of curvature of the first convex round by reflecting a tolerance.

The rechargeable battery module may further include a bus bar holder above the end plates, the side plates, and the battery cells, wherein the bus bar holder may be provided with a coupling groove corresponding to the rib above the side plate, and the rib may be coupled to the coupling groove.

The coupling groove may be formed to be combined with the first concave round structure of the rib, and both sides of the coupling groove may be formed as the first convex round structure of the battery cell.

The side plate may include: a cell support part supporting both sides of the battery cells in the second direction, and a welding portion protruding to the first direction from a center of a third direction crossing the first direction at both ends of the cell support part in the first direction to be welded to the end plate; and the insulating part may be formed on the cell support part of the metal plate.

The insulating part may include an additional insulating part that is formed at both ends of the metal plate in the first direction and both ends thereof in the third direction to insulate end portions thereof.

According to an aspect of one or more embodiments, in a rechargeable battery module, a side plate is formed by including a metal plate, an insulating part, and a rib, such that it may be inexpensive and lightweight, and have high rigidity.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

FIG. 1 illustrates a perspective view of a rechargeable battery module according to an embodiment of the present invention.
FIG. 2 illustrates a planar cross-sectional view taken along the line II-II of FIG. 1.
FIG. 3 illustrates an enlarged cross-sectional view of a region III of FIG. 2.
FIG. 4 illustrates a longitudinal cross-sectional view taken along the line IV-IV of FIG. 1.
FIG. 5 illustrates a longitudinal cross-sectional view taken along the line V-V of FIG. 1.
FIG. 6 illustrates a perspective view of a metal plate applied to a side plate of the rechargeable battery module of FIG. 1.
FIG. 7 illustrates an outer perspective view of a side plate manufactured by injection molding by applying the metal plate of FIG. 6.
FIG. 8 illustrates an inner perspective view of the side plate of FIG. 7.
FIG. 9 illustrates a perspective view of a bus bar holder formed to be coupled to an integrated side plate of FIG. 7 and FIG. 8.
FIG. 10 illustrates a cross-sectional view showing a relationship between a thickness of a metal plate and a size of an insulating part in a side plate of the rechargeable battery module of FIG. 1.

### DESCRIPTION OF REFERENCE SYMBOLS

| | | | |
|---|---|---|---|
| 10: | battery cell | 11: | electrode terminal |
| 20: | end plate | 30: | side plate |
| 31: | metal plate | 32: | insulating part |
| 33: | rib | 40: | bus bar holder |
| 42: | coupling groove | 50: | top plate |
| 301: | cell support part | 302: | welding part |
| 311: | through-hole | 321: | outer insulating part |
| 322: | additional insulating part | CCR1: | first convex round |
| CCR2: | second convex round | CVR1: | first concave round |
| CVR2: | second concave round | D1: | first distance |
| D2: | second distance | t1, t2, t3: | thickness |

### DETAILED DESCRIPTION

The present invention will be described more fully herein with reference to the accompanying drawings, in which some embodiments of the invention are shown. As those skilled in the art would realize, the described embodiments may be modified in various different ways, all without departing from the scope of the present invention. The drawings and description are to be regarded as illustrative in nature and not restrictive. Like reference numerals designate like elements throughout the specification.

In addition, unless explicitly described to the contrary, it is to be understood that terms such as "comprises," "includes," or "have" used in the present specification specify the presence of stated features, numerals, steps, operations, components, parts, or a combination thereof, but do not preclude the presence or addition of one or more other features, numerals, steps, operations, components, parts, or a combination thereof.

Also, in this specification, it is to be understood that when one component is referred to as being "connected" or "coupled" to another component, it may be connected or coupled directly to the other component or connected or coupled to another component with one or more other components intervening therebetween.

Singular forms are to include plural forms unless the context clearly indicates otherwise.

It is to be understood that, although the terms "first," "second," etc. may be used herein to describe various elements, these elements should not be limited by these terms. These terms are used to distinguish one element from another. For example, a first element could be termed a "second" element, and, similarly, a second element could be termed a "first" element, without departing from the scope of example embodiments of the inventive concept. The terms of a singular form may include plural forms unless the context clearly indicates otherwise.

In addition, terms such as "below," "lower," "above," "upper," and the like are used to describe the relationship of the configurations shown in the drawings. However, the terms are used as a relative concept and are described with reference to the direction indicated in the drawings.

Unless otherwise defined, all terms (including technical and scientific terms) used herein have the same meaning as commonly understood by one of ordinary skill in the art to which the inventive concept pertains. It is also to be understood that terms defined in commonly used dictionaries should be interpreted as having meanings consistent with the meanings in the context of the related art, and are expressly defined herein unless they are interpreted in an ideal or overly formal sense.

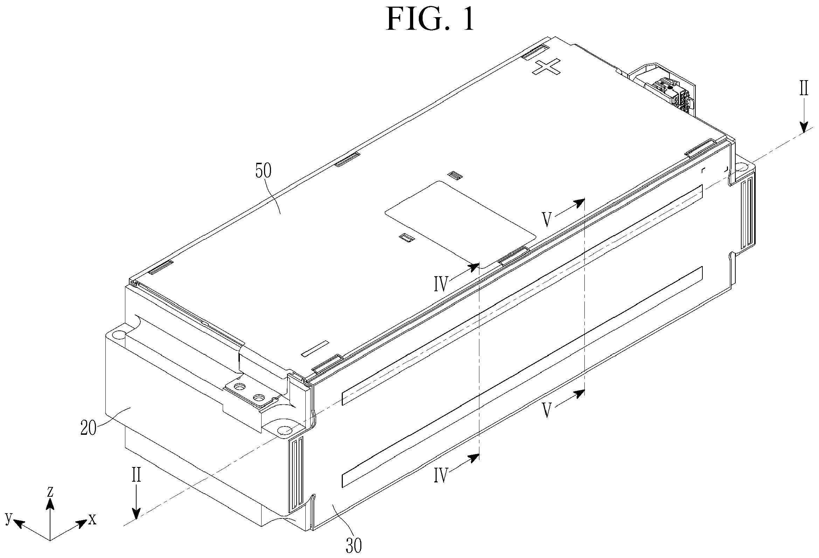

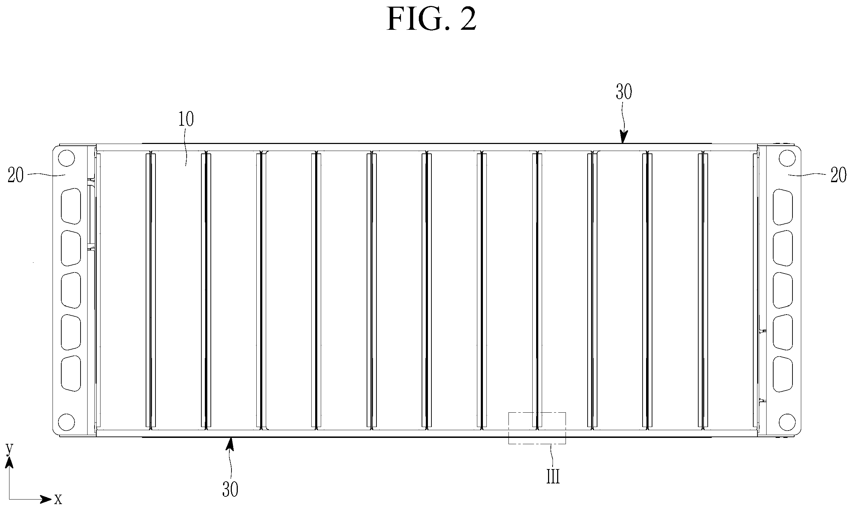

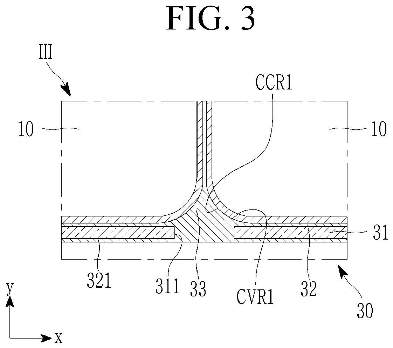

FIG. 1 illustrates a perspective view of a rechargeable battery module according to an embodiment of the present invention; FIG. 2 illustrates a planar cross-sectional view taken along the line II-II of FIG. 1; and FIG. 3 illustrates an enlarged cross-sectional view of a region III of FIG. 2. Referring to FIG. 1 to FIG. 3, a rechargeable battery module according to an embodiment includes a plurality of battery cells 10, a pair of end plates 20, and a pair of side plates 30.

The plurality of battery cells 10 are stacked in a first direction (e.g., an x-axis direction). The pair of end plates 20 are disposed at both ends of the stacked battery cells 10 in the first direction to support the battery cells 10 in the first direction. The pair of side plates 30 are disposed at both sides of the stacked battery cells 10 in a second direction (e.g., a y-axis direction) crossing the first direction to connect the pair of end plates 20 to each other.

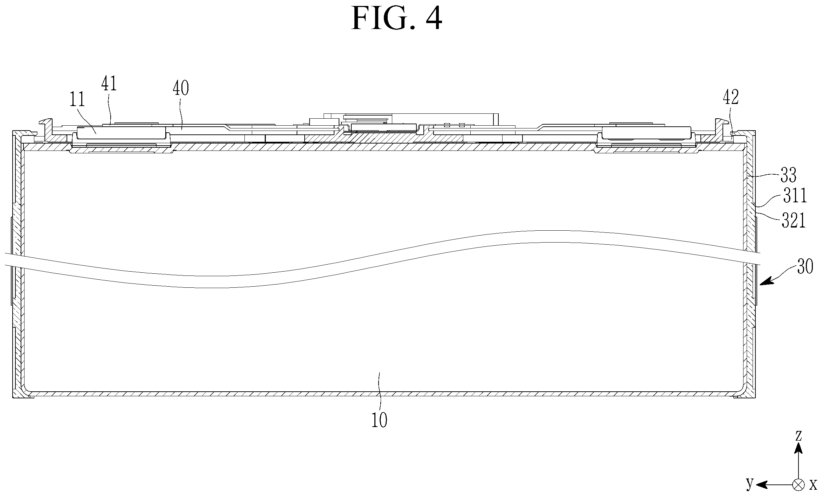

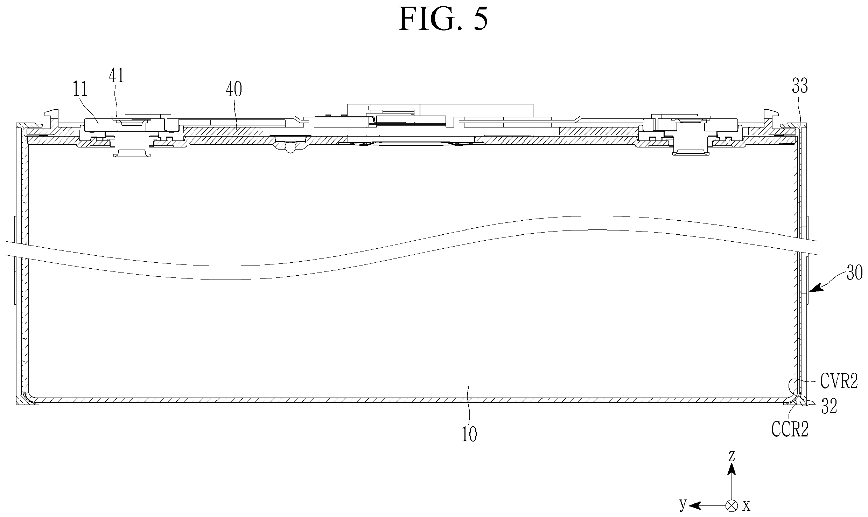

FIG. 4 illustrates a longitudinal cross-sectional view taken along the line IV-IV of FIG. 1; and FIG. 5 illustrates a longitudinal cross-sectional view taken along the line V-V of FIG. 1. FIG. 4 and FIG. 5 illustrate longitudinal cross-sectional views of the rechargeable battery module of FIG. 1 in a state in which a top plate 50 is removed.

Referring to FIG. 1, FIG. 4, and FIG. 5, the rechargeable battery module according to an embodiment further includes a bus bar holder 40 and a top plate 50. The bus bar holder 40 is disposed above the end plates 20, the side plates 30, and the battery cells 10. Bus bars 41 are disposed in the bus bar holder 40 to connect electrode terminals 11 of the battery cells 10 in series or parallel.

The top plate 50 is disposed above the bus bar holder 40 and the bus bars 41 to be fastened to the end plates 20 and the side plates 30 to form a rechargeable battery module. The rechargeable battery module according to an embodiment may be used by being fastened to a platform of an electric vehicle or a rack of an energy storage system, for example.

Referring to FIG. 2 to FIG. 4, the side plate 30 includes a metal plate 31 providing rigidity, an insulating part 32 integrally formed with the metal plate 31, and a rib 33. The rib 33 protrudes from the insulating part 32 between adjacent battery cells 10 to support side surfaces of the adjacent battery cells 10, thereby realizing low cost and light weight.

As an example, the metal plate 31 may be made of aluminum, and the insulating part 32 may be integrally formed on an inner surface of the metal plate 31 and may be formed by injection molding of a synthetic resin material. Since the insulating part 32 is integrally formed with the metal plate 31, a manufacturing process of the side plate 30 is simplified compared to a conventional use of an insulating tape for the side plate.

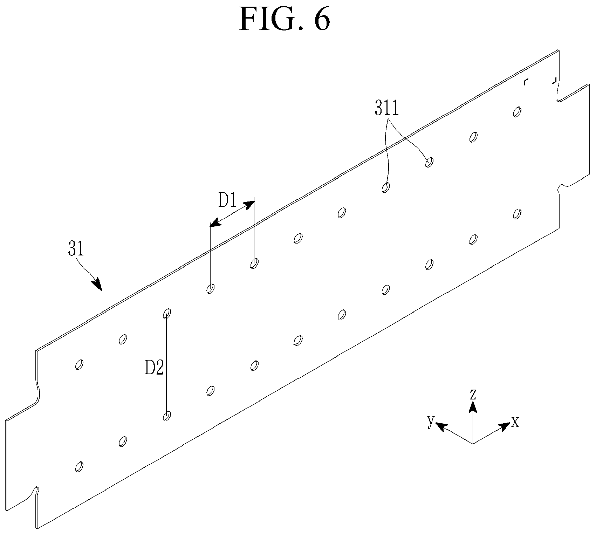

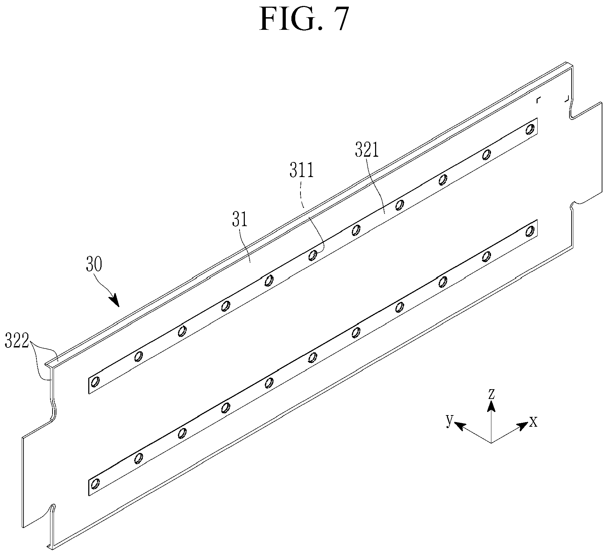

FIG. 6 illustrates a perspective view of a metal plate applied to a side plate of the rechargeable battery module of FIG. 1; and FIG. 7 illustrates an outer perspective view of a side plate manufactured by injection molding by applying the metal plate of FIG. 6.

Referring to FIG. 3 to FIG. 7, the metal plate 31 is provided with a plurality of through-holes 311. The through-holes 311 are spaced apart from each other at a first distance D1 along the first direction (e.g., the x-axis direction), and are spaced apart from each other at a second distance D2 along a third direction (e.g., a z-axis direction). In an embodiment, the plurality of through-holes 311 are formed in two lines along the first direction (e.g., the x-axis direction).

The insulating part 32 includes an outer insulating part 321 formed on an inner surface of the metal plate 31 to be connected to an outer surface of the metal plate 31 through the through-hole 311 to protrude from the outer surface thereof. The through-holes 311 improve bonding strength between the metal plate 31 and the insulating part 32 on the inner surface of the metal plate 31.

In addition, since the outer insulating part 321 connected to the insulating part 32 through the through-holes 311 is formed on the outer surface of the metal plate 31, the outer insulating part 321 further improves the bonding force with the metal plate 31 together with the insulating part 32 on the inner surface.

Referring back to FIG. 2 to FIG. 5, in an embodiment, the battery cells 10 are formed to have a prismatic shape, and form a structure of a lateral first convex round CCR1 at four corners of a cross-section (e.g., an x-y cross-section) with respect to the first direction and the second direction.

Referring to FIG. 2, FIG. 3, and FIG. 4, the rib 33 forms a structure of a first concave round CVR1 corresponding to the structure of the first convex round CCR1 of a lateral surface of the battery cell 10 in the planar cross-section (e.g., the x-y cross-section) with respect to the first direction (e.g., the x-axis direction) and the second direction (e.g., the y-axis direction).

In an embodiment, the rib 33 is formed long in the third direction (e.g., the z-axis direction) crossing the first direction (e.g., the x-axis direction) and the second direction (e.g., the y-axis direction) to correspond to an entire height of the battery cell 10. The structure of the first concave round CVR1 corresponding to the structure of the first convex round CCR1 of the lateral surface of the battery cell 10 increases the rigidity of the side plate 30.

In addition, the structure of the first concave round CVR1 of the rib 33 reduces a weight of the side plate 30, compared to a side plate having the same rigidity without the rib 33.

Referring to FIG. 2, FIG. 3, and FIG. 5, in an embodiment, the battery cells 10 are formed to have a prismatic shape, and a structure of a second convex round CCR2 of the bottom and lateral surface of the battery cell 10 is formed in the longitudinal cross-section (e.g., a y-z cross-section) for the second direction (e.g., the y-axis direction) and the third direction (e.g., the z-axis direction).

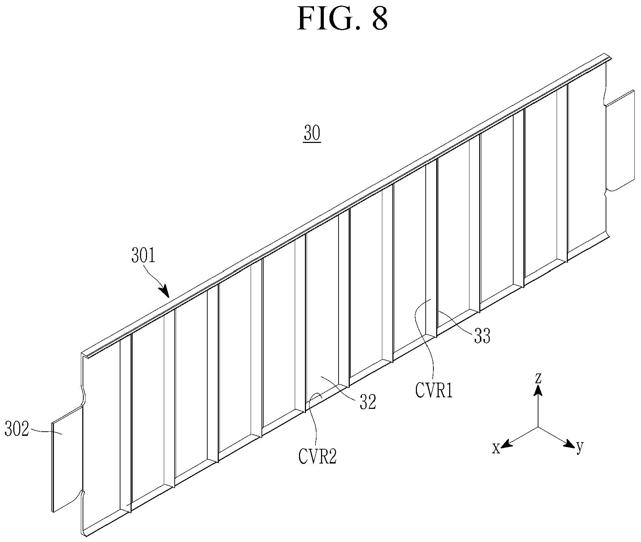

FIG. 8 illustrates an inner perspective view of the side plate of FIG. 7. Referring to FIG. 7 and FIG. 8, a plurality of ribs 33 are formed to be spaced apart from each other along intervals of the battery cells 10 in the second direction.

The insulating part 32 forms the structure of the second concave round CVR2 corresponding to the structure of the second convex round CCR2 of a bottom surface and lateral surface of the battery cell 10 in the longitudinal cross-section (e.g., the y-z cross-section) with respect to the second direction (e.g., the y-axis direction) and the third direction (e.g., the z-axis direction) between the adjacent ribs 33. The structure of the second concave round CVR2 of the insulating part 32 increases the rigidity of the side plate 30 while supporting the battery cell 10 at the bottom side of the battery cell 10.

In addition, the structure of the second concave round CVR2 of the insulating part 32 may reduce a manufacturing cost because the weight of the side plate 31 is reduced in the embodiment, compared to a side plate having the same rigidity by extending the metal plate.

The structure of the first concave round CVR1 corresponding to the structure of the first convex round CCR1, the structure of the second concave round CVR2 corresponding to the structure of the second convex round CCR2, and the structure formed in an entire area of the height of the battery cells 10 may be optimized or improved for the battery cells 10, such that the rigidity of the rechargeable battery module is secured.

In an embodiment, the above-described structure reduces the weight of the side plate 30 by 56 %, reduces a cost thereof by about 20 % to 27 %, and increases the rigidity of the module by 50 %, compared to a conventional side plate. For example, as a result of a 90 g analysis, an amount of deformation in the rechargeable battery module according to an embodiment is reduced by 50 % compared to a conventional example.

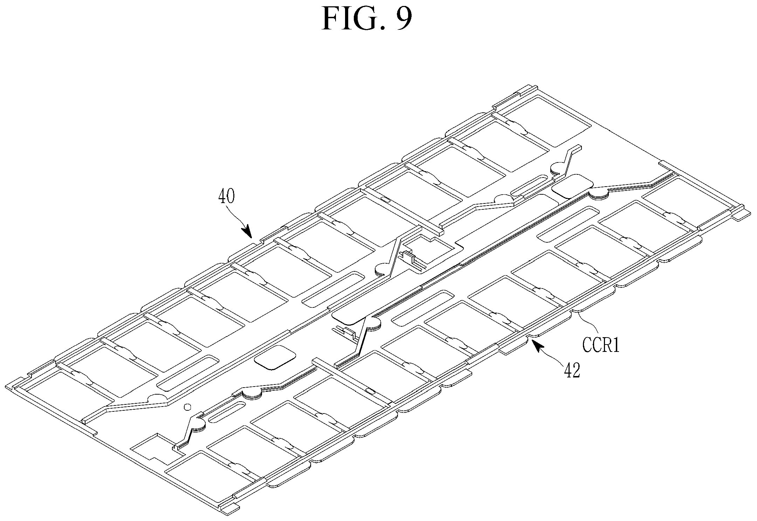

FIG. 9 illustrates a perspective view of a bus bar holder formed to be coupled to an integrated side plate of FIG. 7 and FIG. 8. Referring to FIG. 4, FIG. 5, and FIG. 9, the bus bar holder 40 is provided with a coupling groove 42 corresponding to the rib 33 above the side plate 30. The rib 33 is coupled to the coupling groove 42.

In the module state, since the rib 33 of the side plate 30 is coupled to the coupling groove 42 of the bus bar holder 40 at the upper end of the module, the side plate 30 and the bus bar holder 40 are firmly integrated, such that the entire rigidity of the rechargeable battery module may be further improved.

The coupling groove 42 is formed to be coupled with the structure of the first concave round CVR1 of the rib 33, and both sides of the coupling groove 42 are formed to have the structure of the first convex round CCR1 of the battery cell 10. The structure of the first concave round CVR1 corresponding to the structure of the first convex round CCR1 is combined with the bus bar holder 40 at the upper end of the side plate 30, such that the rigidity of the module may be further improved.

Referring back to FIG. 7 and FIG. 8, the side plate 30 includes a cell support part 301 and a welding part 302. The cell support part 301 supports both sides of the battery cells 10 in the second direction (e.g., the y-axis direction). The cell support part 301 supports the lateral surfaces of the battery cells 10 by the insulating part 32 and the rib 33 of the inside.

The welding part 302 protrudes in the first direction at the center of the third direction crossing the first direction at both ends of the first direction of the cell support part 301 to be welded to the end plate 20. As an example, the welding part 302 may be laser-welded to the end plate 20 in two lines. The insulating part 32 and the rib 33 are formed on the cell support part 301 of the metal plate 31.

Referring to FIG. 7, the insulating part 32 further includes additional insulating parts 322 at both ends of the metal plate 31 in the first direction and in the third direction. The additional insulating part 322 is further formed at an end portion of the metal plate 31 to further insulate the end portion thereof. In addition, the additional insulating part 322 may prevent or substantially prevent an injection quality problem due to a tolerance of the outer dimension of the metal plate 31, for example, a problem of generating a burr. That is, the additional insulating part 322 may insulate and coat a burr formed outside the metal plate 31.

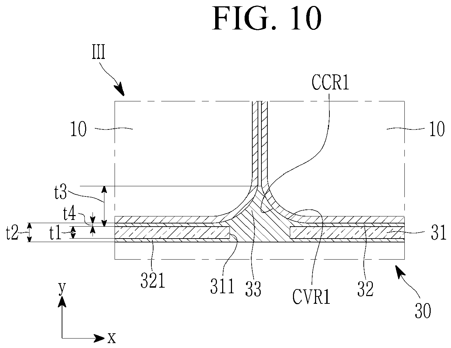

FIG. 10 illustrates a cross-sectional view showing a relationship between a thickness of a metal plate and a size of an insulating part in a side plate of the rechargeable battery module of FIG. 1. Referring to FIG. 10, in an embodiment, a ratio (t1/t2) of a thickness t1 of the metal plate 31 and a thickness t2 of the insulating part 32 is 16.7 % to 66.7 % (see Table 1). Strength reinforcement according to the increase in weight and quantity of the battery cell 10 is possible with the thickness t1 of the metal plate 31. The thickness ratio (t1/t2) is determined according to this.

When the thickness ratio (t1/t2) is less than 16.7 %, the rigidity desired for the side plate 30 may be insufficient due to the insufficient thickness t1 of the metal plate 31. When the thickness ratio (t1/t2) exceeds 66.7 %, a desired weight of the side plate 30 may be exceeded due to the excessive thickness t1 of the metal plate 31.

As an example, the thickness t1 of the metal plate 31 may be 0.5 to 2.0 mm, a thickness t4 of a portion, which is on one side of the metal plate 31, of the insulating part 32 may be 0.3 to 0.6 mm, and a thickness t3 of the rib 33 may be 3 mm. The thickness t4 is shared by the thickness t2 of the insulating part 32 and the thickness t3 of the rib 33. In an embodiment, the thickness t1 of the metal plate 31 may be 0.8 mm; however, when the allowable dimension in the second direction is large, the number of the battery cells 10 is large (for example, 16 to 36), and the weight of the battery cells 10 is heavy (for example, 2 to 3 kg), the thickness t1 may be adjusted.

In an embodiment, a radius of curvature of the first convex round CCR1 of the lateral surface of the battery cell 10 may be 3.5 mm, and a radius of curvature of the first concave round CVR1 of the rib 33 may be 3 mm, that is, smaller than the radius of curvature of the first convex round CCR1 by reflecting the tolerance. Even if the weight of the battery cell 10 becomes heavy, the radius of curvature of the first convex round CCR1 may be applied as 3.5 mm in order to maximize or increase the capacity of the battery cell 10.

**Table 1**

| Embodiment | 1 | 2 | 3 | 4 | 5 |
|---|---|---|---|---|---|
| Thickness of metal plate (t1) (mm) | 0.5 | 0.8 | 1.0 | 1.5 | 2.0 |
| Thickness of insulating part (t2) (mm) | 3 | 3 | 3 | 3 | 3 |
| Thickness ratio (t1/t2) (%) | 16.7 | 26.7 | 33.3 | 50.0 | 66.7 |

In the rechargeable battery module according to one or more embodiments, the side plate 30 has reduced weight by 56 %, reduced component costs by about 20 to 27 %, and increased module rigidity by 50 % compared to a conventional example. The stiffness of the module was reduced by 50 % as a result of the 90 g analysis. That is, according to an embodiment, since the weight of the rechargeable battery module may be decreased, the energy efficiency of a vehicle may be increased, the cost of parts may be reduced, and the module rigidity may be doubled in the same module space, such that the overall thickness of the side plate 30 may be reduced.

That is, the battery cell 10 having an increased area in the second direction may be applied through cost reduction and area increase in the second direction (y-axis direction). Therefore, when the same area is provided in the second direction, the electrical capacity of the battery cell 10 and the module may be increased.

While the present invention has been described in connection with what are presently considered to be some practical embodiments, it is to be understood that the invention is not limited to the disclosed embodiments, but, on the contrary, is intended to cover various modifications and equivalent arrangements included within the scope of the appended claims.

It is clear for one of ordinary skill in the art that the disclosed embodiments can be combined where possible.

## Claims

1. A rechargeable battery module, comprising
a pair of end plates (20) located at both ends in a first direction (x) in which a plurality of battery cells (10) are stacked, and
a pair of side plates (30) located at both sides in a second direction (y) crossing the first direction (x) to connect the pair of end plates (20) to each other,
wherein the side plates (30) comprise:
a metal plate (31) having rigidity;
an insulating part (32) integrally molded to the metal plate (31); and
a rib (33) protruding between adjacent battery cells (10) of the plurality of battery cells (10) in the insulating portion to support lateral surfaces of the adjacent battery cells (10).

2. The rechargeable battery module of claim 1, wherein, in the side plate (30),
the metal plate (31) is made of aluminum, and
the insulating part (32) is integrally formed on an inner surface of the metal plate (31) by injection molding of a synthetic resin material.

3. The rechargeable battery module of claim 1 or 2, wherein
the metal plate (31) comprises a plurality of through-holes (311), and
the insulating part (32) comprises an outer insulating part (321) connected to an outer surface of the metal plate (31) through a through-hole (311) of the plurality of through-holes (311) and protruding from the outer surface.

4. The rechargeable battery module of any one of the preceding claims, wherein
the battery cells (10) have a rectangular shape, and comprise a first convex round (CCR1) structure of a lateral surface at four corners of a planar cross-section with respect to the first direction (x) and the second direction (y).

5. The rechargeable battery module of claim 4, wherein
the rib (33) comprises a first concave round (CVR1) structure corresponding to the first convex round (CCR1) structure of the lateral surface of a battery cell (10) of the battery cells (10) in a planar cross-section with respect to the first direction (x) and the second direction (y).

6. The rechargeable battery module of claim 5, wherein
the rib (33) is formed long in a third direction (z) crossing the first direction (x) and the second direction (y) to correspond to an entire height of the battery cell (10).

7. The rechargeable battery module of claim 6, wherein
the battery cells (10) have a rectangular shape, and comprise a second convex round (CCR2) structure of a bottom surface and a lateral surface of the respective battery cell (10) in a longitudinal cross-section with respect to the second direction (y) and the third direction (z).

8. The rechargeable battery module of claim 7, wherein
the rib (33) is provided as a plurality of ribs (33) spaced apart from each other along intervals of the battery cells (10) in the second direction (y), and
the insulating part (32) forms a second concave round (CVR2) structure corresponding to the second convex round (CCR2) structure of the bottom surface and the lateral surface of the battery cell (10) in the longitudinal cross-section with respect to the second direction (y) and the third direction (z) between adjacent ribs (33) of the plurality of ribs (33).

9. The rechargeable battery module of any one of claims 5 to 8, wherein
a ratio (t1/t2) of a thickness (t1) of the metal plate (31) to a thickness (t2) of the insulating part (32) is 16.7 % to 66.7 %.

10. The rechargeable battery module of any one of claims 5 to 9, wherein
a thickness (t1) of the metal plate (31) is 0.5 to 2.0 mm,
a thickness (t4) of a portion of the insulating part (32), the portion being on one side of the metal plate (31), is 0.3 to 0.6 mm, and
a thickness (t3) of the rib (33) is 3 mm, and
wherein the thickness (t4) of the portion is shared by a thickness (t2) of the insulating part (32) and the thickness (t3) of the rib (33).

11. The rechargeable battery module of any one of claims 5 to 10, wherein
a radius of curvature of the first convex round (CCR1) structure on the lateral surface of the battery cell (10) is 3.5 mm, and
a radius of curvature of the first concave round (CVR1) structure of the rib (33) is 3 mm.

12. The rechargeable battery module of any one of the preceding claims, further comprising
a bus bar holder (40) above the end plates (20), the side plates (30), and the battery cells (10),
wherein the bus bar holder (40) comprises a coupling groove (42) corresponding to the rib (33) above a side plate (30) of the pair of side plates (30), and
the rib (33) is coupled to the coupling groove (42).

13. The rechargeable battery module of claim 12, wherein
the coupling groove (42) is formed to be combined with a first concave round (CVR1) structure of the rib (33), and
both sides of the coupling groove (42) are formed as a first convex round (CCR1) structure of the battery cell (10).

14. The rechargeable battery module of any one of the preceding claims, wherein:
the side plates (30) comprise a cell support part (301) supporting both sides of the battery cells (10) in the second direction (y), and a welding portion protruding to the first direction (x) from a center of a third direction (z) crossing the first direction (x) at both ends of the cell support part (301) in the first direction (x) to be welded to the end plate (20); and
the insulating part (32) is formed on the cell support part (301) of the metal plate (31).

15. The rechargeable battery module of claim 14, wherein
the insulating part (32) comprises an additional insulating part (322) at both ends of the metal plate (31) in the first direction (x) and both ends thereof in the third direction (z) to insulate end portions thereof.
